# NEUE EUROPÄISCHE PATENTSCHRIFT

(11) **EP 0 900 543 B2**
(45) Veröffentlichungstag und Bekanntmachung des Hinweises auf die Entscheidung über den Einspruch: **24.01.2007**
(45) Hinweis auf die Patenterteilung: 11.12.2002
(21) Anmeldenummer: 98108536.8
(22) Anmeldetag: 11.05.1998
(51) Int. Cl.: A47J 47/20, E03C 1/18

(54) **Spüle mit Spülbecken und Einhängebehälter**
Sink unit with sink and receptacle suspended in the basin
Evier avec bac et récipient suspendu

(30) Priorität: 05.09.1997 DE 19738964
(43) Veröffentlichungstag der Anmeldung: 10.03.1999
(73) Patentinhaber: bulthaup GmbH & Co. Küchensysteme, 84153 Aich (DE)
(72) Erfinder: Wudy, Johann, 94249 Bodenmais (DE); Klemisch, Reinhard, 84494 Neumarkt-St. Veit (DE); Haberl, Thomas, 85356 Freising/Attaching (DE); Brendel, Alfred, 85521 Ottobrunn (DE)
(74) Vertreter: Laufhütte, Dieter

(56) Entgegenhaltungen:
- EP-A- 0 306 762
- DE-A- 2 904 504
- DE-A- 3 621 151
- DE-C- 19 624 673
- JP-A- 9 075 151
- US-A- 2 447 788
- US-A- 4 456 021

## Beschreibung

Die vorliegende Erfindung betrifft eine Spüle mit Spülebecken wie im Oberbegriff des Anspruchs 1 angegeben, vgl. DE-A-19624673.

Bei bekannten Spülen wird die als Arbeitstisch dienende Platte im wesentlichen zur Ablage und Bearbeitung von Nahrungsmitteln sowie zum Hantieren mit Küchengeräten oder Behältern und dergleichen verwendet. Zur Durchführung häufig anfallender Arbeiten wie Schneiden, Raspeln oder Schälen werden üblicherweise mit der Hand zu bedienende und oft umständlich zu haltende Küchengeräte oder auch Küchenmaschinen verwendet, wobei Schalen oder ähnliche Behälter zur Aufnahme der beispielsweise zerkleinerten Nahrungsmittel vorzusehen sind. Daran schließen sich im allgemeinen weitere Bearbeitungsschritte an, die in einem Vermischen oder auch in einem Waschen der Lebensmittel bestehen können. Ein Waschvorgang läßt sich bei gattungsgemäßen Spülen beispielsweise in einem in das Spülebecken einhängbaren Behäfter durchführen, wozu die Nahrungsmittel entsprechend umgefüllt werden müssen. Neben der Vielzahl von zur Zubereitung notwendigen Arbeitsschritten ist es bei gattungsgemäßen Spülen von Nachteil, daß eine zuverlässige Fixierung der verwendeten Küchengeräte nur schwer realisierbar ist.

Die PS 37 44 318 offenbart eine Tragevorrichtung zur Fixierung von Küchengeräten im Bereich der Arbeitsplatte, bei der die Küchengeräte oder -maschinen in einer entsprechend ausgeformten Aussparung aufnehmbar sind. Die Tragevorrichtung ist als Schlitten ausgeführt, der in einer Richtung über einer Vertiefung in der als Arbeitstisch dienenden Platte bewegbar ist, wobei in die Vertiefung beispielsweise eine Schale zur Aufnahme der bearbeiteten Nahrungsmittel eingestellt werden kann. Die Führung der Tragevorrichtung erfolgt mittels zweier Stufen, die sich auf zwei gegenüberliegenden und parallel verlaufenden Rändern der Vertiefung erstrecken und ein Verschieben in einer dazu senkrechten Richtung wirksam verhindern. Nach dem Verarbeitungsvorgang muß der untergestellte Behälter entnommen und der Inhalt einer weiteren Bearbeitung, beispielsweise einem Waschvorgang im Spülebecken, zugeführt werden.

Es ist die Aufgabe der vorliegenden Erfindung, eine gattungsgemäße Spüle dahingehend weiterzubilden, daß die Verarbeitung und Zubereitung von Nahrungsmitteln erleichtert wird.

Diese Aufgabe wird mittels dem Gegenstand des Anspruchs 1 gelöst. Eine derartige Ausgestaltung einer erfindungsgemäßen Spüle bewirkt, daß im eingehängten Zustand des Behälters zwischen den Außenflächen der Randbereiche der Wandungen und den Rändern der Vertiefung ein Bereich verbleibt, der zur Aufnahme von dem als Schneidbrett oder als Träger für Küchenwerkzeuge dienenden Schlitten dient. Die erfindungsgemäße Vorrichtung ermöglicht es, beispielsweise in einem Bereich der Spüle auf einem in der Vertiefung bewegbaren Schneidbrett Nahrungsmittel zuzubereiten und anschließend mittels der Führung durch die Ränder der Vertiefung zum Rand des Spülebeckens oder auch über das Spülebecken zu verschieben. Aus dieser Position können nunmehr beispielsweise zerkleinerte Nahrungsmittel ohne weiteres von dem Schneidbrett in die erfindungsgemäßen Behälter eingefüllt werden, ohne daß dazu eine Entnahme oder ein Verschieben der Behälter oder das mehrmalige Umfüllen der Lebensmittel notwendig ist. Auch ist es möglich, daß sich die Vertiefung in Richtung der Ränder auf beide Seiten des Spülebeckens erstreckt, wodurch auf entsprechend beiden Seiten unterschiedliche Verarbeitungsvorgänge durchgeführt bzw. unterschiedliche Nahrungsmittel zubereitet werden können. Ein Verschieben eines Schneidbrettes in den Bereich des Spülebeckens, in dem sich der oder die erfindungsgemäßen Behälter befinden, ist ohne weiteres möglich und gestattet beispielsweise zunächst die Zufuhr unterschiedlicher Nahrungsmittel und im Anschluß daran deren Reinigung oder Weiterverarbeitung in dem im Spülebecken eingehängten Behälter. Wenn dies für den Bearbeitungsvorgang notwendig ist, sind die Behälter auch außerhalb der Spüle beispielsweise auf dem Arbeitstisch positionierbar.

Die erfindungsgemäßen Behälter dienen je nach Größe beispielsweise zum Waschen von Obst, Gemüse, zum Geschirreinigen, Glasspülen sowie als Abtropffläche für zu trocknende Gegenstände oder Nahrungsmittel. Die Behälter eignen sich darüber hinaus für eine Vielzahl weiterer Tätigkeiten wie das Zubereiten, das Reinigen, das Lagern, das Kochen oder auch Backen von Lebensmitteln. Ebenso ist es möglich, darin Vorräte beispielsweise im Kühlfach oder Gefrierfach aufzubewahren. Durch das Zusammenwirken von Behälter, Schiebeebene in der Vertiefung sowie weiterer Arbeitsmittel wird das Handling und das Arbeiten erleichtert, die Arbeitsabläufe optimiert und Zeiteinsparungen bei der Hausarbeit ermöglicht.

Besonders vorteilhaft ist es, wenn wenigstens eine Wandung und/oder der Boden des Behälters einen oder mehrere Durchbrüche aufweist. Eine derartige Ausgestaltung des Behälters ermöglicht das Abtropfen oder Ablaufen von Wasser von zu trocknenden Gegenständen oder Lebensmitteln.

Gemäß einer bevorzugten Ausgestaltung der vorliegenden Erfindung kann der Boden des Behälters als Siebboden ausgeführt sein. Dies ist insbesondere dann von Vorteil, wenn Nahrungsmittel, z.B. Salat, nach dem Zerkleinern gereinigt werden sollen. Hierbei ist es möglich, zunächst eine Zubereitung beispielsweise auf einem verschiebbaren Schneidbrett durchzuführen, durch Verschieben des Schneidbrettes das Nahrungsmittel in den Bereich des eingehängten Behälters zu führen und schließlich nach dem Einfüllen darin zu waschen.

In weiterer Ausgestaltung der vorliegenden Erfindung ist vorgesehen, daß die Randbereiche des Behälters durch Abkanten herstellbar sind. Auf diese Weise wird ein sicherer Halt des Behälters im Spülebecken ermöglicht.

Besonders vorteilhaft ist es, wenn die Randbereiche der Behälter ein im wesentlichen U-förmiges Profil aufweisen, welches durch zweimaliges Abkanten herstellbar ist. Dadurch wird zum einen die Verletzungsgefahr an scharfen Kanten der Randbereiche des Behälters verringert und zum anderen können die ineinander gestapelten Behälter in Abhängigkeit von der Dimensionierung des Randbereiches einen derartigen Abstand voneinander aufweisen, daß diese leicht gegriffen werden können. Es ist vorteilhaft, wenn der entsprechend ausgeformte Randbereich auf einer Seite offen ist, da dessen Reinigung dadurch erleichtert wird. Da die Randbereiche der Behälter nicht nur zum Einhängen in das Spülebecken, sondern auch als Griffkanten dienen können ist eine U-förmige Profilierung der Randbereiche von Vorteil, da der Benutzer mit Flächen und nicht mit Kanten der Randbereiche in Berührung kommt.

Gemäß einer bevorzugten Ausgestaltung der vorliegenden Erfindung fluchtet ein Schenkel der U-förmigen Randbereiche des Behälters mit der Oberkante des Behälters und der gegenüberliegende Schenkel bildet die Auflagefläche des Behälters. Dabei ist der als Auflagefläche dienende Schenkel vorteilhaft parallel zu der diesen abstützenden Fläche der Spüle auszubilden, um eine möglichst gleichmäßige Krafteinleitung zu gewährleisten und ein Verkratzen der Oberfläche des Randbereichs der Spüle zu vermeiden. Beide Schenkel des U-förmigen Randbereichs können unterschiedliche Längen aufweisen, wobei der als Auflagefläche dienende Schenkel des Randbereiches vorteilhaft nicht mit der Behälterwandung in Berührung steht, um die Reinigung des Randbereiches zu erleichtern und somit ein hygienisches Arbeiten zu gewährleisten.

In weiterer Ausgestaltung dervorliegenden Erfindung ist vorgesehen, daß die Randbereiche der Behälter abgerundete Oberflächen aufweisen. Die Außenflächen derartiger Randbereiche können dabei das Querschnittsprofil eines geschlossenen oder offenen Kreisrings aufweisen. Die Schaffung abgerundeter Oberflächen der Randbereiche der Behälter verhindert wirksam die Verletzung beim Eingriff und ermöglicht ferner eine verhältnismäßig einfache Herstellung, da ein Abkanten in diesem Fall nicht notwendig ist.

Besonders vorteilhaft ist es, wenn mehrere Behälter vorgesehen sind, deren Wandungen einen in Richtung des Behälterbodens abnehmenden Abstand aufweisen. Auf diese Weise ist es möglich, die Behälter ineinander zu stapeln. Dies ist insbesondere dann sinnvoll, wenn in einem oberen mit einem Siebboden ausgeführten Behälter ein Nahrungsmittel getrocknet wird und die Flüssigkeit nicht verworfen, sondern in dem darunter befindlichen Behälter aufgenommen werden soll.

Die Behälter können derart ineinander aufnehmbar sein, daß sie auf den Randbereichen abstützbar sind. Somit ist es möglich, mehrere Behälter übereinander aufzuschichten, wobei der Abstand der Behälter untereinander durch die Ausgestaltung der sich berührenden Randbereiche vorgebbar ist.

Gemäß einer bevorzugten Ausgestaltung der vorliegenden Erfindung sind mehrere Behälter vorgesehen und derart dimensioniert, daß sie nebeneinander im Spülebecken angeordnet werden können. In diesem Fall können beispielsweise mittels eines im Trageschlitten aufnehmbaren Werkzeugs zunächst die Abfälle in einem der Behälter aufgenommen und im Anschluß daran der Schlitten derart verschoben werden, daß der benachbarte Behälter nunmehr beispielsweise mit zerkleinerten Nahrungsmitteln befüllt werden kann. Außer dem Verschieben des Schlittens sind keine weiteren Handgriffe erforderlich, wenn eine Küchenmaschine verwendet wird, da weder das Halten der Maschine noch das Unterstellen eines Behälters notwendig sind. Vielmehr erfolgt ein unmittelbares Befüllen des Behälters, der im Falle der Ausführung mit Siebboden ferner zum Waschen der aufgenommenen Nahrungsmittel dient.

Besonders vorteilhaft ist es, wenn die nicht als Auflagefläche dienenden Ränder und/oder Randbereiche des Behälters durch Abbördeln herstellbar sind. Auf diese weise wird erreicht, daß scharfkantige und somit zu Verletzungen führende Kanten des Behälters vermieden werden können.

Gemäß einer bevorzugten Ausgestaltung der vorliegenden Erfindung weist der Behälter eine im wesentlichen rechteckige Form auf, wobei die Übergänge aneinandergrenzender Wandungen und/oder der Wandungen und der Bodenfläche gerundet ausgeführt sind. Während die rechteckige Ausführung im wesentlichen aus Gründen der Ästhetik bevorzugt wird dienen die gerundeten Übergänge zur einfacheren Herstellung und besseren Reinigungsmöglichkeit der erfindungsgemäßen Behälter.

In weiterer Ausgestaltung der vorliegenden Erfindung ist vorgesehen, daß auf der Außenseite des Behälterbodens Vorsprünge vorgesehen sind. Somit kann zum einen ein sicherer Stand der Behälter geschaffen und zum anderen die Oberflächen vor Beschädigungen geschützt werden. Die Vorsprünge können dabei durch Ausbeulen der Innenseite der Behälter geschaffen werden.

In einer weiteren Ausgestaltung der erfindungsgemäßen Vorrichtung ist vorgesehen, daß der Behälter aus Edelstahl besteht.

Besonders vorteilhaft ist es, wenn die Behälter Anschlagmittel aufweisen, mittels derer die Behälter zwischen den gegenüberliegenden Wandungen des Spülebekkens geführt werden. Dadurch ist es möglich, die Spülebecken in unterschiedlichen Tiefen vorzusehen, ohne daß eine entsprechende Vielzahl unterschiedlich tiefer Behälter bereitgestellt werden muß. Vielmehr ist es ausreichend, die Behälter mit einer gleichbleibenden Tiefe herzustellen und eine Anpassung auf die variablen Dimensionen der Spülebecken mittels der erfindungsgemäßen Anschlagmittel vorzunehmen. Damit erübrigt sich ferner die Bereitstellung unterschiedlicher Tiefziehwerkzeuge, da die Anpassung der Behälter an unterschiedliche Tiefen des Spülebeckens mittels der erfindungsgemäßen Anschlagmittel erfolgt.

Gemäß einer bevorzugten Ausgestaltung der vorliegenden Erfindung umfassen die Anschlagmittel ein eine Stufe aufweisendes Gleitelement, wobei die Stufe derart ausgeführt ist, daß das Gleitelement eine Auflagefläche zur Auflage auf der Vertiefung der Spüle oder auf der als Arbeitstisch dienenden Platte sowie eine Anschlagfläche zur Führung durch die Wandungen des Spülebeckens aufweist.

In weiterer Ausgestaltung dervorliegenden Erfindung ist die Anschlagfläche des Gleitelementes nicht durchgehend ausgeführt.

Besonders vorteilhaft ist es, wenn das Gleitelement aus gleitfähigem Kunststoff besteht.

Gemäß einer bevorzugten Ausgestaltung der vorliegenden Erfindung sind der Behälter und das Gleitelement verklebt, und sowohl der Kunststoff des Gleitelementes als auch die Verklebung sind hitzebeständig. Damit sind die erfindungsgemäßen Einhängebehälter für den Einsatz in Backofen, Mikrowelle und auch zur Reinigung im Geschirrspüler geeignet. Die Gleitelemente können vorgefertigt und nachträglich an den Behältern angeklebt werden. Ebenso ist es möglich, daß die Gleitelemente direkt im Spritzverfahren an die Behälter angespritzt werden, so daß undichte Stellen aufgrund von Toleranzen ausgeschlossen werden.

In weiterer Ausgestaltung der Erfindung ist vorgesehen, daß die Anschlagmittel Winkelelemente aufweisen, die an den Randbereichen der Behälter montierbar sind. Die Winkelelemente sind bevorzugt leicht austauschbar, so daß sich problemlos eine Anpassung der Behälterführung an die Tiefe des Spülebeckens realisieren läßt.

Die Anschlagmittel können stiftförmige Elemente aufweisen, die an den Behältern fixierbar sind. Derartige stiftförmige Elemente bewirken ebenfalls, daß die Behälter mit nur wenig oder ohne Spiel zwischen den gegenüberliegenden Wandungen des Spülebekkens geführt werden.

Dabei kann die Fixierung der stiftförmigen Elemente mittels einer am Behälter montierten Mutter und eines Gewindestiftes erfolgen.

Besonders vorteilhaft ist es, wenn Gleitstifte vorgesehen sind, die eine Auflagefläche der Randbereiche der Behälter bilden. Derartige Gleitstifte sind vorteilhaft derart ausgeführt, daß eine Beschädigung der die Gleitstifte führenden Flächen ausgeschlossen wird. Die Gleitstifte weisen in ihrer Gleitfläche bevorzugt Kunststoff und insbesondere PFA auf.

Weitere Einzelheiten und Vorteile der vorliegenden Erfindung werden anhand eines in der Zeichnung dargestellten Ausführungsbeispiels näher erläutert. Es zeigen:
- Fig. 1:: Eine perspektivische Ansicht sowie eine Draufsicht der erfindungsgemäßen Spüle mit Schlitten, Vertiefung und Behälter,
- Fig. 2:: Querschnittsansichten des Schlittens, des Behälters sowie der Vertiefung und des Spülebeckens,
- Fig. 3:: eine Draufsicht des Behälters sowie Schnittdarstellungen mit Einzelheiten,
- Fig. 4:: eine Draufsicht des Behälters sowie Schnittdarstellungen mit Einzelheiten eines als Schale ausgeführten Behälters,
- Fig. 5:: eine Draufsicht des Behälters sowie Schnittdarstellungen mit Einzelheiten eines mit Siebboden ausgestatteten Behälters und
- Fig. 6:: einen Querschnitt durch Schlitten, Spüle mit Spülebecken sowie zwei Behälter mit abgerundeten Randbereichen.
- Fig. 7:: eine Darstellung des erfindungsgemäßen Behälters mit Gleitelementen in einer Ansicht von unten, von der Seite sowie in einer perspektivischen Ansicht,
- Fig. 8:: eine Querschnittsansicht eines in das Spülebecken eingehängten Behälters mit Gleitelement, wobei die Auflagefläche des Gleitelementes erfindungegemäß durch die Vertiefung der Spüle gebildet wird,
- Fig. 9:: eine Darstellung eines erfindungsgemäßen Behälters mit Gleitelement, dessen Anschlagfläche nicht durchgehend ausgeführt ist, in einer Ansicht von unten, von der Seite sowie in einer perspektivischen Ansicht,
- Fig. 10:: Seitenansichten von erfindungsgemäßen Behältern, deren Randbereiche Winkelelemente aufweisen,
- Fig. 11:: eine Seitenansicht eines erfindungsgemäßen Behälters mit einem stiftförmigen Element als Anschlagmittel und
- Fig. 12:: Ansichten von unten auf die erfindungsgemäßen Behälter mit stiftförmigen Elementen sowie mit einem Winkelelement.

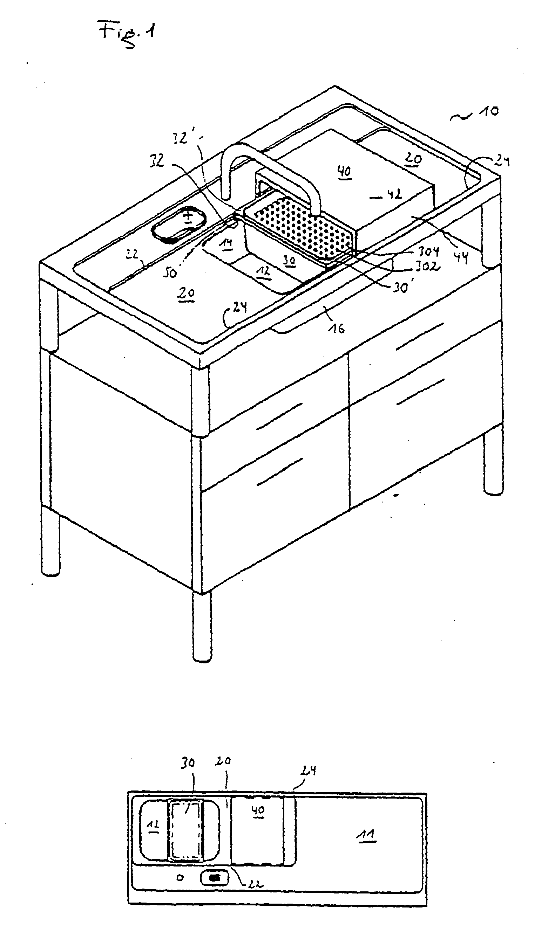

Fig. 1 zeigt die erfindungsgemäße Spüle 10 mit Spülebecken 12 und den gegenüberliegenden Spülebeckenwandungen 14 und 16. An das Spülebecken 12 grenzt die Vertiefung 20 an, deren Ränder 22 und 24 zueinander parallel und stufenförmig ausgeführt sind. Fig. 1 verdeutlicht, daß die Ränder 22 und 24 der Vertiefung 20 sich von einer Seite der Spüle 10 über zwei gegenüberliegende Seiten des Spülebeckens 12 bis zur anderen Seite der Spüle 10 erstrecken und die Vertiefung 20 somit auf zwei Seiten an das Spülebecken 12 angrenzt. Die Ränder 22 und 24 weisen einen Abstand voneinander auf, der den Abstand der auf den gegenüberliegenden Seiten des Spülebeckens 12 befindlichen Spülebeckenwandungen 14 und 16 überschreitet. Die Behälter 30 und 30' sind gemäß dem in Fig. 1 dargestellten Ausführungsbeispiel übereinander angeordnet, wobei der untere Behälter 30 im Spülebecken 12 aufgenommen ist. Beide Behälter 30 und 30' werden mittels ihrer Randbereiche 32, 32' abgestützt, wobei der größte Abstand der Randbereiche 32, 32' über dem Abstand der Wandungen 14 und 16 liegt. Der größte Abstand der Randbereiche 32, 32' ist ferner derart bemessen, daß zwischen den Rändern 22 und 24 der Vertiefung 20 und den Randbereichen 32, 32' jeweils ein Bereich 50 verbleibt.

Ferner ist ein Schlitten 40 mit einer Platte 42 sowie sich davon erstreckenden Fußteilen 44 vorgesehen, wobei die Fußteile 44 in dem Bereich 50 zwischen den Randbereichen 32, 32' der Behälters 30, 30' und den entsprechenden Rändern 22 und 24 der Vertiefung 20 aufgenommen sind. Erfindungsgemäß läßt sich der Schlitten 40 längs der Ränder 22 und 24 der Vertiefung 20 bewegen und ermöglicht somit, daß dieser neben oder über dem Bereich der eingehängten Behälter 30, 30' angeordnet werden kann.

Fig. 1 zeigt ferner, daß der obere Behälter 30' Durchbrüche 302 in der Bodenfläche 304 aufweist. Derartige Durchbrüche 302 können entweder zum Abtropfen oder Trocknen eines Nahrungsmittels oder von Geschirr oder bei entsprechender Ausführung auch als Reibefläche zum Zerkleinern von Nahrungsmitteln herangezogen werden. Die Behälter 30, 30' sind im Spülebecken verschieblich angeordnet.

Fig. 1, unten zeigt die Draufsicht der erfindungsgemäßen Spüle 10 und verdeutlicht, daß die Vertiefung 20 auch entsprechend nur über einen Teilbereich der als Arbeitstisch dienenden Platte 11 ausgeführt sein kann. Man erkennt ferner, daß die gegenüberliegenden Kanten 22 und 24 der Vertiefung 20 parallel angeordnet sind und in den Endbereichen der Vertiefung 20 mittels zweier dazu senkrechtverlaufender Flächen oder Stufen verbunden sind.

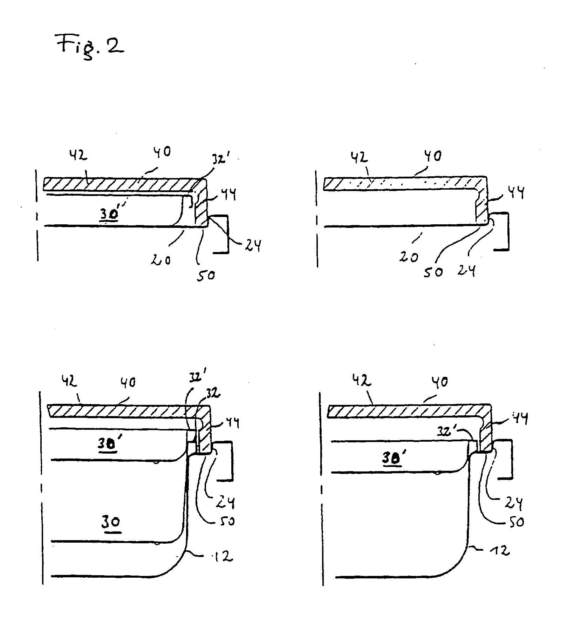

In Fig. 2 sind unterschiedliche Querschnittsdarstellungen des Schlittens 40 sowie der Behälter 30, 30' dargestellt. Man erkennt zunächst in allen Ausführungsbeispielen gemäß Fig. 2, daß die Außenflächen des Fußteils 44 des Schlittens 40 derart ausgeführt sind, daß diese an den jeweiligen Rand 24 der Vertiefung 20 angrenzen. Die Fußteile 44 des Schlittens 40 sind gemäß dem vorliegenden Ausführungsbeispiel derart dimensioniert, daß unterhalb der Platte 42 des Schlittens 40 ein Behälter 30' aufnehmbar ist. Eine in Fig. 2 unten dargestellte Querschnittszeichnung zeigt den Schlitten 40 sowie Behälter 30, 30', die in dem Spülebecken 12 eingehängt sind. Man erkennt, daß die Behälter 30, 30' übereinander aufnehmbar sind, wobei zwischen der Außenfläche der Randbereiche 32, 32' der Behälter 30,30' und dem jeweiligen Rand 24 der Vertiefung 20 erfindungsgemäß ein Bereich 50 zur Aufnahme des Fußteils 44 des Schlittens 40 verbleibt. Somit ist gewährleistet, daß der Schlitten 40 auch wenn mehrere Behälter 30, 30' im Spülebekken 12 eingehängt sind ohne Hindernisse über die gesamte Länge der Vertiefung 20 bewegbar ist.

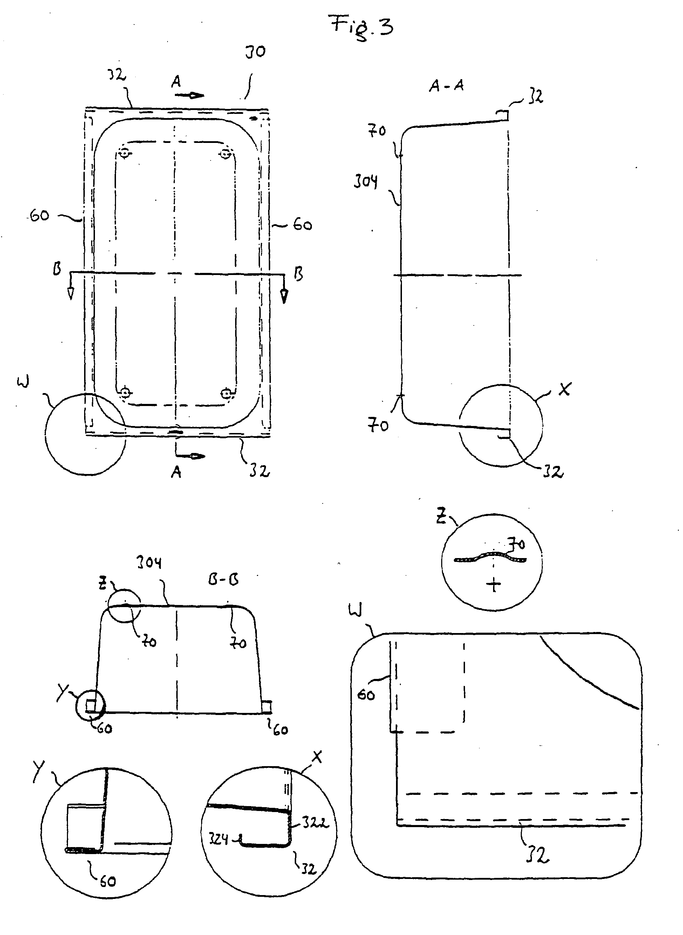

Fig. 3 zeigt in der Draufsicht einen erfindungsgemäßen Behälter 30 sowie Schnittzeichnungen gemäß der Linien A-A und B-B. Die Schnittzeichnung gemäß der Linie A-A in Fig. 3 verdeutlicht, daß die Wandungen des Behälters 30 in Richtung des Behälterbodens 304 zulaufen, wodurch ein Stapeln der Behälter ermöglicht wird. Im Bereich der Außenseite der Bodenfläche 304 des Behälters 30 erkennt man ferner Vorsprünge 70, die einen sicheren Stand des Behälters 30 ermöglichen. Diese sind in der Einzelheit Z gemäß der Schnittzeichnung nach Linie B-B vergrößert dargestellt. Einzelheit X zeigt den als Griff und Auflage dienenden Randbereich 32 des Behälters 30. Man erkennt, daß dieser gemäß dem vorliegenden Ausführungsbeispiel zweimal abgekantet wurde und somit letztlich eine U-förmige Querschnittsgestalt aufweist. Dabei fluchtet der obere Schenkel 322 des Randbereichs 32 mit der Oberkante des Behälters 30 während der untere, hier kürzer ausgeführte Schenkel 324 als Auflagefläche des Behälters 30 auf dem Rand des Spülebeckens bzw. auf einem weiteren Behälter dient.

Einzelheit Y gemäß der Schnittzeichnung nach Linie B-B verdeutlicht den nicht als Auflagefläche dienenden Randbereich 60 des Behälters 30 und zeigt, daß dieser einmal abgebördelt ist, wodurch die Entstehung einer scharfen Kante wirksam verhindert wird. Einzelheit W gemäß der Draufsicht des Behälters 30 in Fig. 3 zeigt einen Eckbereich des Behälters 30 sowie die Anordnung der Randbereiche 32 und 60. Einzelheit W verdeutlicht, daß sich der Randbereich 32 zur Auflage über die gesamte Breite des Behälters 30 erstreckt, während der abgebördelte Bereich 60 von dem Eckbereich des Behälters 30 beabstandet ist.

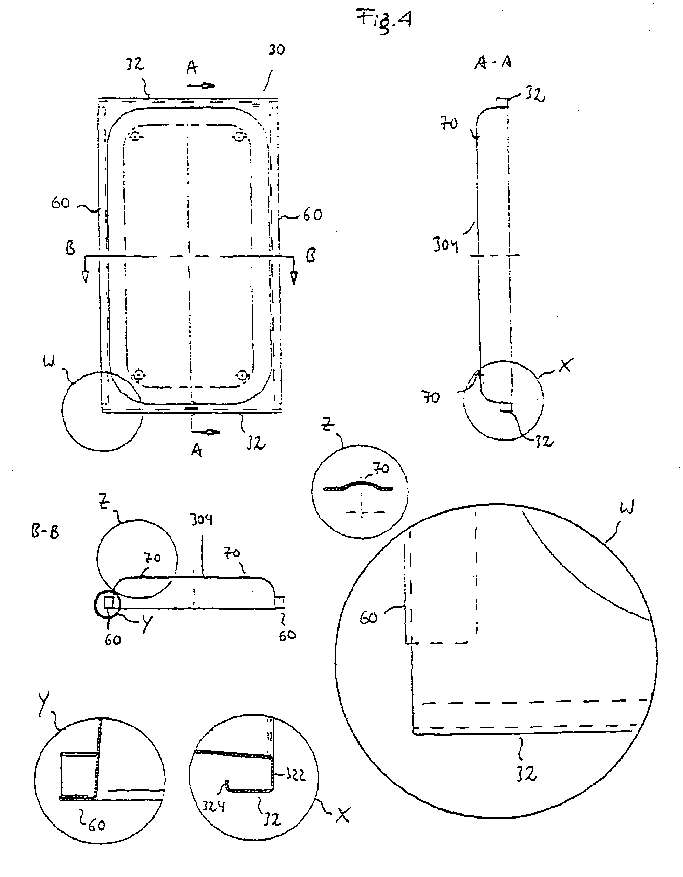

Fig. 4 zeigt den Behälter 30, der in diesem Fall eine geringere Höhe als der in Fig. 3 dargestellte Behälter aufweist. Der Behälter gemäß Fig. 4 dient somit als Schale und kann erfindungsgemäß entweder in einen weiteren Behälter oder in das Spülebecken 12 eingehängt werden. In Fig. 4 sind ferner Schnittzeichnungen gemäß der Linien A-A und B-B dargestellt. Man erkennt, daß hier eine geringere Tiefe des Behälters 30 vorgesehen ist, während die Ausführung der Randbereiche 32 und 60 sowie die Anordnung der Vorsprünge 70 und des Eckbereiches, die in den Einzelheiten W. X, Y und Z dargestellt sind, dem Ausführungsbeispiel gemäß Fig. 3 entsprechen.

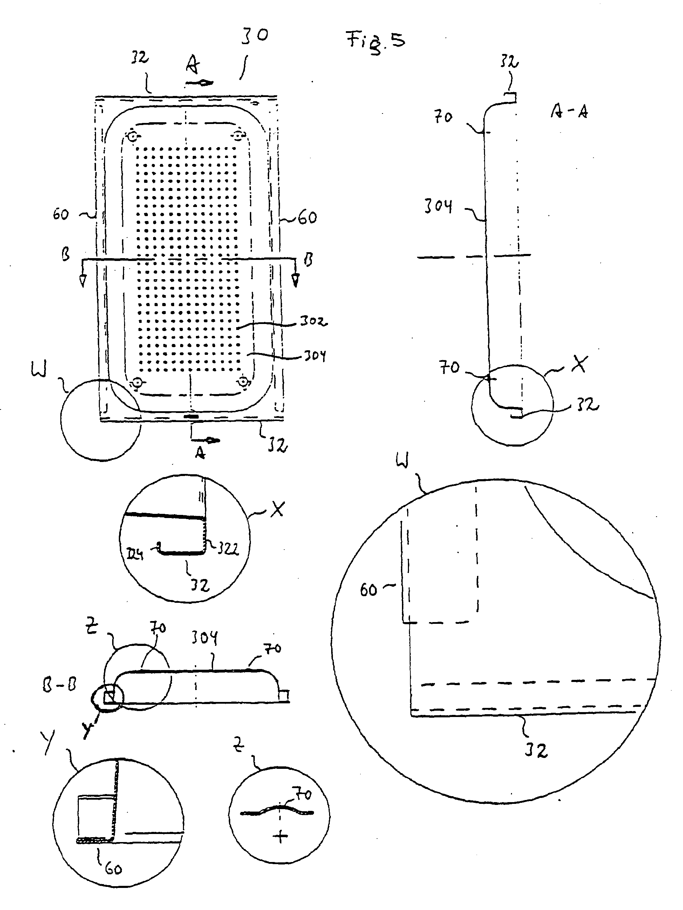

In Fig. 5 ist eine weitere Ausgestaltung der vorliegenden Erfindung dargestellt, wobei hier der Behälter 30 in den äußeren Abmessungen dem Behälter 30 gemäß Fig. 4 entspricht, in seiner Bodenfläche 304 jedoch Durchbrüche 302 aufweist und somit als Sieb eingesetzt werden kann. Die Schaffung eines derartigen Behälters 30 ist auch dann sinnvoll, wenn die durch die Durchbrüche 302 des Bodens 304 tretende Flüssigkeit nicht verworfen, sondern weiterverwendet werden soll. In diesem Fall ist vorgesehen, daß der in Fig. 5 dargestellte Behälter 30 in einen weiteren Behälter ohne Siebboden eingehängt wird, wodurch sowohl das Abtropfen eines Gutes wie auch die Verwertung der entsprechenden Flüssigkeit möglich ist. Auch in Fig. 5 sind Schnittdarstellungen gemäß der Linien A-A und B-B dargestellt. Die Randbereiche 32 gemäß der Einzelheit X und 60 gemäß der Einzelheit Y entsprechen den in Fig. 3 dargestellten. Dies gilt ebenso für den Eckbereich W sowie die gemäß der Einzelheit Z dargestellten Vorsprünge 70.

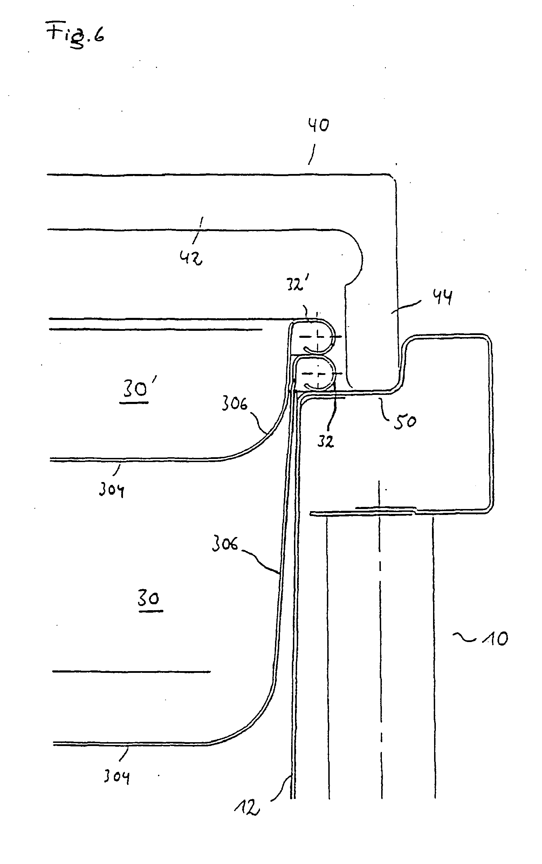

Fig. 6 zeigt im Querschnitt die Spüle 10, das Spülebecken 12 sowie zwei eingehängte Behälter 30, 30'. Darüber hinaus ist im Querschnitt der Schlitten 40 dargestellt, dessen Fußteile 44 im Bereich 50 aufgenommen sind. Hier dargestellt sind zwei übereinander angeordnete Behälter 30, 30', deren Randbereiche 32, 32' nicht abgekantet sind, sondern eine gerundete Oberfläche aufweisen. Damit wird besonders wirksam das Verletzungsrisiko beim Greifen der Behälter 30, 30' vermindert. Die Höhe der Randbereiche 32 bestimmt den Abstand zwischen den Behältern und ermöglicht bei entsprechender Ausführung eine gute Greifbarkeit auch von gestapelten Behältern 30, 30'. Gemäß dem vorliegenden Ausführungsbeispiel berührt das Fußteil 44, das sich senkrecht von der Platte 42 des Schlittens 40 erstreckt nicht die Außenseiten der Randbereiche 32, wodurch ein leichtes Verschieben des Schlittens 40 ermöglicht und ein Zerkratzen der aneinandergrenzenden Flächen wirksam verhindert wird. Die Innenfläche 306 der Behälter ist derart ausgeführt, daß die aneinandergrenzenden Wandungen bzw. die Böden 304 gerundete Übergänge aufweisen und ohne die Entstehung von Kanten ineinander übergehen.

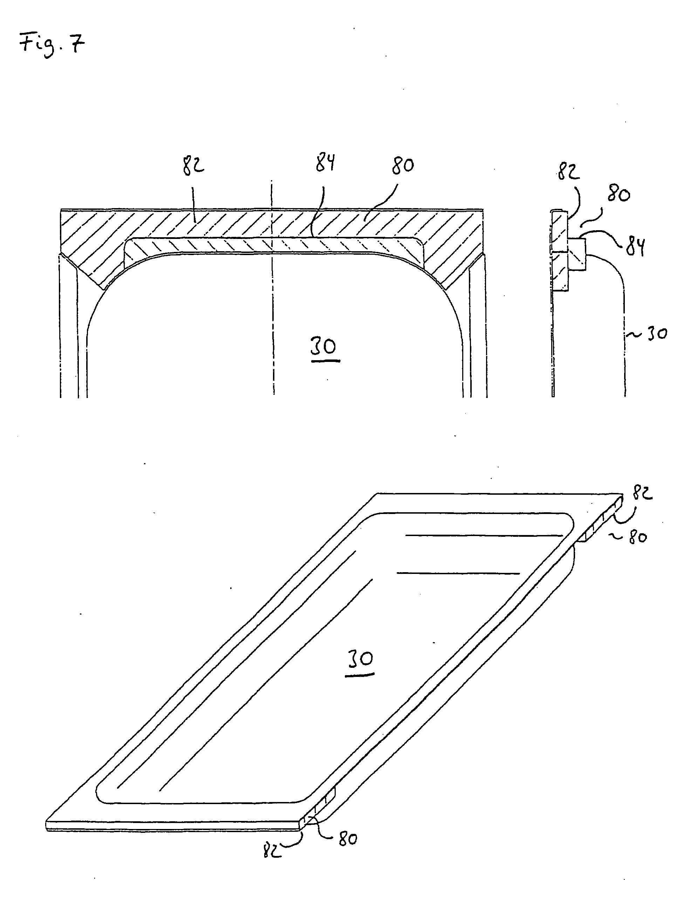

Fig. 7, links zeigt in einer Ansicht von unten einen erfindungsgemäßen Behälter 30, der in seinen Randbereichen Gleitelemente 80 aufweist. In Fig. 7, rechts und unten ist eine Ansicht des Behälters von der Seite sowie eine perspektivische Ansicht dargestellt. Die Gleitelemente 80 sind stufenförmig ausgeführt und bilden somit eine Auflagefläche 82 zur Auflage des Gleitelementes 80 bzw. des Behälters 30 auf der Vertiefung der erfindungsgemäßen Spüle, sowie eine Anschlagfläche 84, mittels derer der Behälter 30 zwischen den Wandungen eines Spülebeckens sicher geführt wird. Das Gleitelement 80 ist leicht herstell- und maßlich veränderbar, so daß unterschiedliche Größen des Spülebekkens berücksichtigt werden können. Gemäß dem Ausführungsbeispiel nach Fig. 7 ist die Anschlagfläche durchgehend ausgeführt.

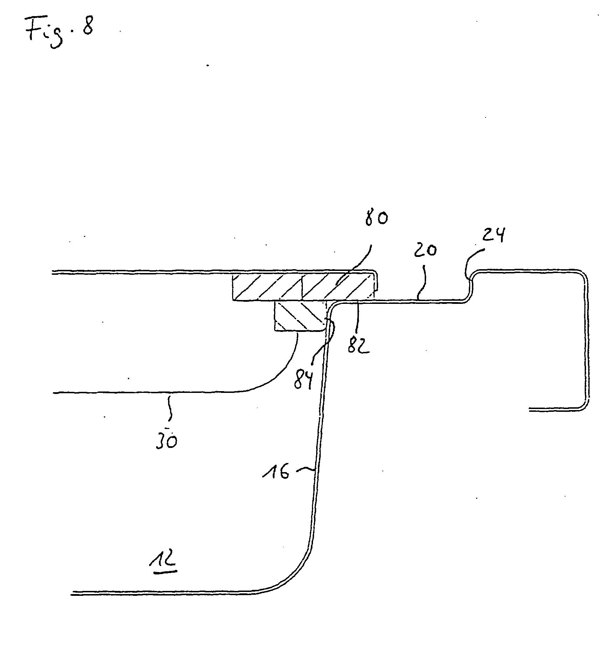

Fig. 8 zeigt eine Schnittdarstellung durch einen erfindungsgemäßen Behälter 30 und das Spülebecken 12. Der Behälter 30 weist in seinen Randbereichen das Gleitelement 80 auf, das mittels der Auflagefläche 82 auf der durch den Rand 24 begrenzten Vertiefung 20 der Spüle aufliegt. Das Spülebecken 12 sowie die Vertiefung 20 mit angrenzender Arbeitsfläche sind vorzugsweise aus Metall gefertigt. Die Führung des Behälters 30 im Spülebecken 12 wird durch die Anschlagfläche 84 gewährleistet, die an der Wandung 16 des Spülebekkens 12 anliegt. Maßanpassungen an unterschiedlich dimensionierte Spülebecken 12 sind durch die variable Gestaltung des Gleitelementes 80 sowie durch die entsprechende Ausführung der vorderen und hinteren Abkantung des Behälters 30 möglich, ohne daß dazu ein neues Tiefziehwerkzeug erforderlich wird.

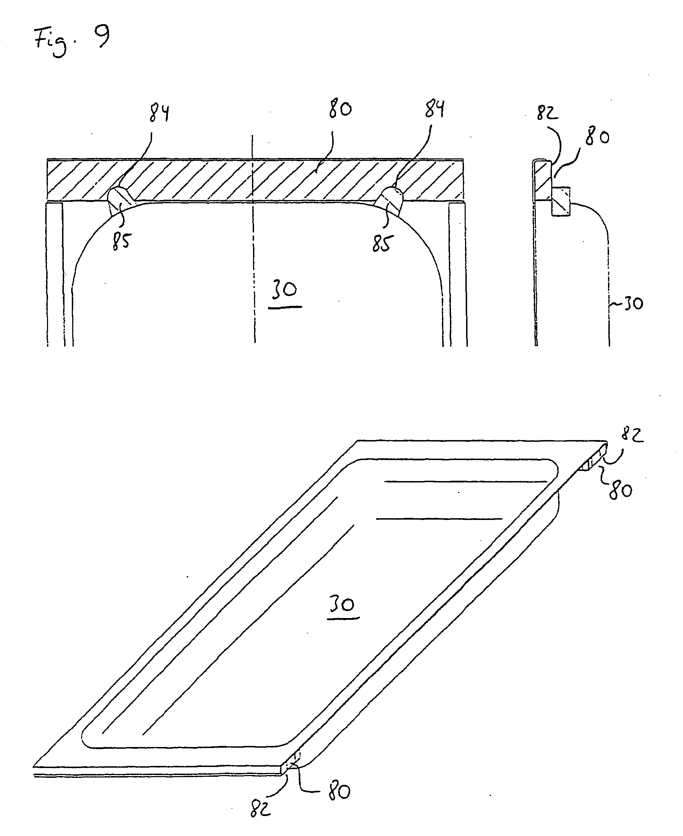

In Fig. 9, links ist in einer Ansicht von unten eine Ausführungsform des erfindungsgemäßen Behälters 30 mit einem Gleitelement 80 dargestellt, dessen Anschlagfläche 84 nicht durchgehend ausgeführt ist. Vielmehr sind zwei noppenförmige Anschläge 85 vorgesehen, die jeweils eine Anschlagfläche 84 zur Führung des Behälters 30 in dem Spülebecken bilden. Die Seitenansichtgem. Fig. 9, rechts, zeigt, daß auch in diesem Fall das Gleitelement 80 stufenförmig ausgeführt ist, wobei die Fläche 82 als Auflagefläche und die Fläche 84 als Anschlagfläche des Behälters 30 dienen. Fig. 9, unten zeigt den Behälter 30 in einer perspektivischen Ansicht und verdeutlicht, daß Gleitelemente 80 in beiden Endbereichen des Behälters 30 angeordnet sind.

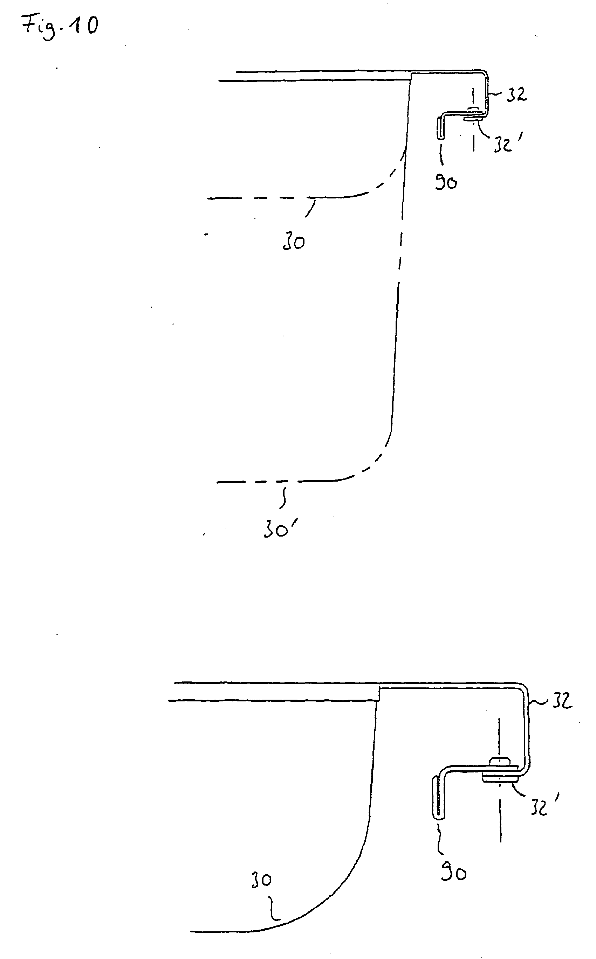

Fig. 10 zeigt eine Ausführungsform des Behälters 30, 30', bei der die Anschlagmittel Winkelelemente 90 aufweisen, die an den Randbereichen 32 der Behälter 30, 30' angeordnet sind. Die Winkelelemente 90 sind vorteilhaft als Blechwinkel ausgeführt. Die Verbindung der Winkelelemente 90 mit dem Randbereich 32 der Behälter 30, 30' erfolgt mittels der Gleitstifte 32', die die Auflagefläche des Behälters 30, 30' auf einer entsprechenden Vertiefung der Spüle bilden. Um eine Beschädigung der entsprechenden Flächen zu vermeiden, sind die Gleitstifte 32' vorteilhaft auf PFA ausgeführt. Fig.10, unten, zeigt eine vergrößerte Darstellung des Randbereichs 32 mit dem Winkelelement 90, das mittels des Gleitstiftes 32' an dem Randbereich 32 fixiert ist.

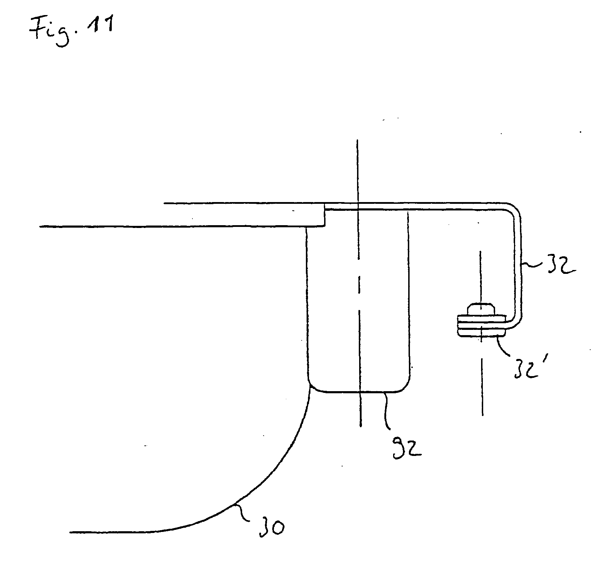

In Fig. 11 ist eine Seitenansicht auf einen Behälter 30 mit Anschlagmittel dargestellt, bei der die Anschlagmittel ein stiftförmiges Element 92 aufweisen, das an dem Behälter 30 fixierbar ist. Durch die Wahl des Durchmessers sowie der Position des stiftförmigen Elementes 92 kann unabhängig von der Größe des Behälters 30 dessen exakte Führung zwischen den Wandungen des Spülebeckens erreicht werden. Dabei wird die Anschlagfläche mit dem Spülebecken durch die stiftförmigen Elemente 92 und die Auflagefläche auf einer Vertiefung oder Arbeitsplatte durch die Gleitstifte 32' gebildet, die sich am Ende der Randbereiche 32 erstrecken. Die stiftförmigen Elemente 92 sind vorteilhaft aus PFA oder aus Metall ausgeführt. Die Befestigung der stiftförmigen Elemente 92 an dem Behälter 30 erfolgt vorteilhaft mittels einer am Behälter 30 angeschweißten Mutter.

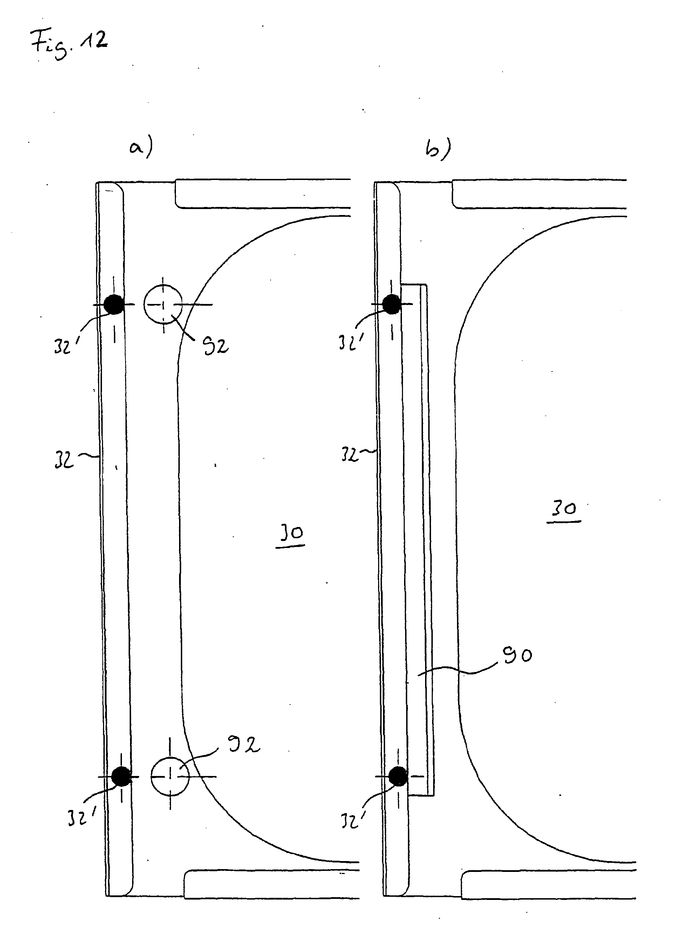

Fig. 12 zeigt in Ansichten von unten die Behälter 30, die als Anschlagmittel gemäß Fig. 12a die stiftförmigen Elemente 92 und gemäß Fig. 12b das Winkelelement 90 aufweisen.

In beiden Fällen weisen die Randbereiche 32 die Gleitstifte 32' auf, die eine Auflagefläche auf der erfindungsgemäßen Vertiefung der Spüle bilden. Die Anschlagfläche an entsprechenden Wandungen eines Spülebekkens wird gemäß Fig. 12a durch die sich auf der Unterseite der Behälter 30 erstreckenden stiftförmigen Elemente 92 gebildet. Fig. 12b zeigt eine Ausführungsform, bei der die Anschlagmittel des Behälters 30 an einer Wandung des Spülebekkens durch Winkelelemente 90 gebildet werden, wobei in diesem Fall die Gleitstifte 32' als Verbindungsmittel zwischen den Randbereichen 32 und dem Winkelelement 90 sowie gleichzeitig auch als Auflagefläche für den Behälter 30 dienen.

Die erfindungsgemäßen Anschlagmittel geben eine Möglichkeit an die Hand, die erfindungsgemäßen Behälter an unterschiedliche Größen des Spülebeckens anzupassen, ohne daß die Bereitstellung neuer Tiefziehwerkzeuge erforderlich ist. Dies wird erreicht, indem die Behälter mit den erfindungsgemäßen Anschlagmitteln versehen werden. Auch können die vordere und hintere Abkantung der Edelstahlbehälter beliebig verlängert werden, ohne daß ein neues Tiefziehwerkzeug erforderlich wird. Maßanpassungen sind dadurch ohne weiteres möglich.

Die beanspruchte Spüle ermöglicht ein leichtes Handling der gesamten Vorrichtung und läßt eine Optimierung der Arbeitsabläufe zu, was die Zubereitung von Nahrungsmitteln entsprechend erleichtert und den dazu notwendigen Zeitaufwand verringert.

## Patentansprüche

1. Spüle (10) mit Spülebecken (12) und einer im wesentlichen ebenen und als Arbeitstisch dienenden Platte (11), wobei in der Platte (11) eine an das Spülebekken (12) angrenzende Vertiefung (20) vorgesehen ist, von der wenigstens zwei Ränder (22, 24) stufenförmig und zueinander parallel ausgeführt sind, wobei sich die Ränder (22, 24) auf zwei gegenüberliegenden Seiten des Spülebeckens (12) erstrecken und voneinander einen Abstand aufweisen, der den Abstand der auf den gegenüberliegenden Seiten des Spülebeckens (12) befindlichen Spülebekkenwandungen (14, 16) überschreitet,
**dadurch gekennzeichnet,**
**daß** die Vertiefung (20) einstufig ausgeführt ist, dass wenigstens ein in das Spülebecken (12) einhängbarer Behälter (30) vorgesehen ist, von dessen Wandungen sich Randbereiche (32) erstrecken, deren größter Abstand über dem Abstand der Spülebeckenwandungen (14, 16) und unter dem Abstand der Ränder (22, 24) der Vertiefung (20) liegt, und daß ferner ein als Schneidbrett oder als Träger für Küchenwerkzeuge dienender Schlitten (40) vorgesehen ist, der eine Platte (42) und sich davon erstreckende Fußteile (44) aufweist, die derart ausgeführt sind, daß sie im Bereich (50) zwischen den Randbereichen (32) des Behälters (30) und dem Rand (22, 24) der Vertiefung (20) verschiebbar aufnehmbar sind.

2. Spüle (10) nach Anspruch 1, **dadurch gekennzeichnet, daß** wenigstens eine Wandung und/oder der Boden (304) des Behälters (30) einen oder mehrere Durchbrüche (302) aufweist.

3. Spüle (10) nach Anspruch 2, **dadurch gekennzeichnet, daß** der Boden (304) des Behälters (30) als Siebboden ausgeführt ist.

4. Spüle (10) nach einem oder mehreren der Ansprüche 1-3, **dadurch gekennzeichnet, daß** die Randbereiche (32) des Behälters (30) durch Abkanten herstellbar sind.

5. Spüle (10) nach Anspruch 4, **dadurch gekennzeichnet, daß** die Randbereiche (32) der Behälter (30) ein im wesentlichen U-förmiges Profil aufweisen.

6. Spüle (10) nach Anspruch 5, **dadurch gekennzeichnet, daß** ein Schenkel (322) der U-förmigen Randbereiche (32) mit der Oberkante des Behälters (30) fluchtet und der gegenüberliegende Schenkel (324) die Auflagefläche des Behälters (30) bildet.

7. Spüle (10) nach einem oder mehreren der Ansprüche 1-3, **dadurch gekennzeichnet, daß** die Randbereiche (32) der Behälter (30) abgerundete Oberflächen aufweisen.

8. Spüle (10) nach einem oder mehreren der Ansprüche 1-7, **dadurch gekennzeichnet, daß** mehrere Behälter (30,30') vorgesehen sind, deren Wandungen einen in Richtung des Behälterbodens (304) abnehmenden Abstand aufweisen.

9. Spüle (10) nach Anspruch 8, **dadurch gekennzeichnet, daß** die Behälter (30,30') derart ineinander aufnehmbar sind, daß sie auf den Randbereichen (32) abstützbar sind.

10. Spüle (10) nach einem oder mehreren der Ansprüche 1-9, **dadurch gekennzeichnet, daß** mehrere Behälter (30,30') vorgesehen sind und derart dimensioniert sind, daß sie nebeneinander im Spülebecken (12) angeordnet werden können.

11. Spüle (10) nach einem oder mehreren der Ansprüche 1-10, **dadurch gekennzeichnet, daß** die nicht als Auflagefläche dienenden Ränder und/oder Randbereiche (60) des Behälters (30) durch Abbördeln herstellbar sind.

12. Spüle (10) nach einem oder mehreren der Ansprüche 1-11, **dadurch gekennzeichnet, daß** die Behälter (30) eine im wesentlichen rechteckige Form aufweisen und die Übergänge aneinandergrenzender Wandungen und/oder der Wandungen und der Bodenfläche (304) gerundet ausgeführt sind.

13. Spüle (10) nach einem oder mehreren der Ansprüche 1-12, **dadurch gekennzeichnet, daß** auf der Außenseite des Behälterbodens (304) Vorsprünge (70) vorgesehen sind.

14. Spüle (10) nach einem oder mehreren der Ansprüche 1-13, **dadurch gekennzeichnet**, der Behälter (30) aus Edelstahl besteht.

15. Spüle (10) nach einem oder mehreren der Ansprüche 1 bis 14, **dadurch gekennzeichnet, daß** die Behälter (30) Anschlagmittel aufweisen, mittels derer die Behälter (30) zwischen den gegenüberliegenden Wandungen (14,16) des Spülebeckens (12) geführt werden.

16. Spüle (10) nach Anspruch 15, **dadurch gekennzeichnet, daß** die Anschlagmittel ein eine Stufe aufweisendes Gleitelement (80) umfassen, wobei die Stufe derart ausgeführt ist, daß das Gleitelement (80) eine Auflagefläche (82) zur Auflage auf der Vertiefung (20) der Spüle (10) oder auf der als Arbeitstisch dienenden Platte (11) sowie eine Anschlagfläche (84) zur Führung durch die Wandungen (14,16) des Spülebeckens (12) aufweist.

17. Spüle (10) nach Anspruch 16, **dadurch gekennzeichnet, daß** die Anschlagfläche (84) des Gleitelementes (80) nicht durchgehend ausgeführt ist.

18. Spüle (10) nach Anspruch 16 oder 17, **dadurch gekennzeichnet, daß** das Gleitelement (80) aus gleitfähigem Kunststoff besteht.

19. Spüle (10) nach Anspruch 18, **dadurch gekennzeichnet, daß** Behälter (30) und Gleitelement (80) verklebt sind und sowohl der Kunststoff des Gleitelementes (80) als auch die Verklebung hitzebeständig sind.

20. Spüle (10) nach einem oder mehreren der Ansprüche 15 bis 19, **dadurch gekennzeichnet, daß** die Anschlagmittel Winkelelemente (90) aufweisen, die an den Randbereichen (32) der Behälter (30,30') montierbar sind.

21. Spüle (10) nach einem oder mehreren der Ansprüche 15 bis 20, **dadurch gekennzeichnet, daß** die Anschlagmittel stiftförmige Elemente (92) aufweisen, die an den Behältern (30) fixierbar sind.

22. Spüle (10) nach Anspruch 21 **dadurch gekennzeichnet, daß** die Fixierung der stiftförmigen Elemente (92) mittels einer am Behälter (30) montierten Mutter und eines Gewindestiftes erfolgt.

23. Spüle (10) nach einem oder mehreren der Ansprüche 20 bis 22, **dadurch gekennzeichnet, daß** Gleitstifte (32') vorgesehen sind, die eine Auflagefläche der Randbereiche (32) der Behälter (30) bilden.

## Claims

1. Sink unit (10) with basin (12) and an essentially flat plate (11) serving as a work surface, said plate (11) containing a recess (20) adjoining the basin (12), from which recess (20) at least two edges (22, 24) are of stepped and mutually parallel design, said edges (22, 24) extending to two opposing sides of the basin (12) and having a distance from one another which exceeds the distance between the sink walls (14, 16) located on the opposing sides of the basin (12),
**characterised in that**
the recess (20) is executed as a single step, at least one receptacle (30) which can be suspended in the basin (12) is provided, from the walls of which extend edge areas (32), the larger distance between which is more than the distance between basin walls (14, 16) and less than the distance between edges (22, 24) of the recess (20), and that a sliding element (40) is further provided as a cutting board or as a bearing surface for kitchen utensils, which sliding element (40) features a plate (42) with feet (44) extending from this which are designed so that they can be located and slid in the area (50) between the edge areas (32) of the receptacle (30) and the edges (22, 24) of the recess (20).

2. Sink unit (10) according to Claim 1, **characterised in that** at least one wall and/or the bottom (304) of the receptacle (30) exhibits one or several holes (302).

3. Sink unit (10) according to Claim 2, **characterised in that** the bottom (304) of the receptacle (30) is designed as a colander bottom.

4. Sink unit (10) according to one or several of Claims 1-3, **characterised in that** the edge areas (32) of the receptacle (30) can be manufactured by bending.

5. Sink unit (10) according to Claim 4, **characterised in that** the edge areas (32) of the receptacle (30) exhibit an essentially channel-shaped profile.

6. Sink unit (10) according to Claim 5, **characterised in that** one limb (322) of the U-shaped edge areas (32) is flush with the top edge of the receptacle (30) and the opposing limb (324) forms the bearing surface of the receptacle (30).

7. Sink unit (10) according to one or several of Claims 1-3, **characterised in that** the edge areas (32) of the receptacle (30) feature rounded surfaces.

8. Sink unit (10) according to one or several of Claims 1-7, **characterised in that** several receptacles (30, 30') are provided, the walls of which feature a decreasing distance between them in the direction of the receptacle bottom (304).

9. Sink unit (10) according to Claim 8, **characterised in that** the receptacles (30, 30') can be fitted one inside the other so that they are resting on the edge areas (32).

10. Sink unit (10) according to one or several of Claims 1-9, **characterised in that** several receptacles (30, 30') are provided, these being dimensioned such that they can be arranged adjacent to one another in the basin (12).

11. Sink unit (10) according to one or several of Claims 1-10, **characterised in that** the edges and/or edge areas (60) of the receptacle (30) not serving as a bearing surface may be fabricated by beading.

12. Sink unit (10) according to one or several of Claims 1-11, **characterised in that** the receptacles (30) exhibit an essentially square shape and the transitions between adjoining walls and/or the walls and the bottom (304) are radiused.

13. Sink unit (10) according to one or several of Claims 1-12, **characterised in that** projections (70) are provided on the outside of the receptacle bottom (304).

14. Sink unit (10) according to one or several of Claims 1-13, **characterised in that** the receptacle (30) is of stainless steel.

15. Sink unit (10) according to one or several of Claims 1-14, **characterised in that** the receptacles (30) exhibit attachments by which the receptacles (30) can be located between the opposing walls (14, 16) of the basin (12).

16. Sink unit (10) according to Claim 15, **characterised in that** the attachments engage a sliding element (80) exhibiting a step, said step being designed so that the sliding element (80) provides a bearing surface (82) for mounting on the recess (20) of said sink unit (10) or on the plate (11) serving as a work surface, and also a contact area (84) for location by the walls (14, 16) of the basin (12).

17. Sink unit (10) according to Claim 16, **characterised in that** the contact area (84) of the sliding element (80) is not continuous.

18. Sink unit (10) according to Claim 16 or 17, **characterised in that** the sliding element (80) is of surface-slip plastics.

19. Sink unit (10) according to Claim 18, **characterised in that** receptacle (30) and sliding element (80) are adhesive-bonded and that the plastics of the sliding element (80) and the bond are both heat-resistant.

20. Sink unit (10) according to one or several of Claims 15 to 19, **characterised in that** the attachments exhibit angle elements (90) which can be mounted on the edge areas (32) of the receptacles (30, 30').

21. Sink unit (10) according to one or several of Claims 15 to 20, **characterised in that** the attachments exhibit pin-shaped elements (92) which can be fixed to the receptacles (30).

22. Sink unit (10) according to Claim 21, **characterised in that** the fixing of the pin-shaped elements (92) is effected by means of a nut mounted on the receptacle (30) and a threaded stud.

23. Sink unit (10) according to one or several of Claims 20 to 22, **characterised in that** sliding pins (32') are provided which form the bearing surface of the edge areas (32) of the receptacles (30).

## Revendications

1. Evier (10) avec bac (12) et un plateau (11) essentiellement plan et servant de table de travail, le plateau (11) présentant un enfoncement (20) voisinant le bac (12), dont au moins deux bords (22, 24) sont exécutés en forme de gradin et réciproquement parallèles, les bords (22, 24) s'étendant sur deux côtés opposés du bac (12) et présentant réciproquement une distance qui dépasse la distance des parois du bac (14, 16) se trouvant sur les côtés opposés du bac (12),
**caractérisé en ce que**
l'enfoncement (20) est exécuté à un gradin, qu'au moins un récipient (30) pouvant être suspendu dans le bac (12) est prévu, à partir des parois duquel s'étendent des zones de bord (32) dont la distance maximale se situe au-dessus de la distance des parois du bac (14, 16) et au-dessous de la distance des bords (22, 24) de l'enfoncement (20), et que par ailleurs un chariot (40) est prévu servant comme planche à couper ou comme support pour des outils de cuisine, qui présente un plateau (42) et des pièces de piétement (44) qui s'étendent à partir de ce dernier, qui sont conçues de manière à ce qu'elles peuvent être reçues en pouvant se déplacer dans la zone (50) entre les zones de bord (32) du récipient (30) et le bord (22, 24) de l'enfoncement (20).

2. Evier (10) selon la revendication 1, **caractérisé en ce qu'**au moins une paroi et/ou un fond (304) du récipient (30) présentent un ou plusieurs perçages 302.

3. Evier (10) selon la revendication 2, **caractérisé en ce que** le fond (304) du récipient (30) est exécuté en passoire.

4. Evier (10) selon l'une ou plusieurs des revendications 1 à 3, **caractérisé en ce que** les zones de bord (32) du récipient (30) sont réalisables par repliage.

5. Evier (10) selon la revendication 4, **caractérisé en ce que** les zones de bord (32) des récipients (30) présentent un profil essentiellement en forme de U.

6. Evier (10) selon la revendication 5, **caractérisé en ce qu'**une branche (322) des zones de bord (32) en forme de U est alignée sur le bord supérieur du récipient (30) et la branche (324) en face forme la surface d'appui du récipient (30).

7. Evier (10) selon l'une ou plusieurs des revendications 1 à 3, **caractérisé en ce que** les zones de bord (32) des récipients (30) présentent des surfaces arrondies.

8. Evier (10) selon l'une ou plusieurs des revendications 1 à 7, **caractérisé en ce que** plusieurs récipients (30, 30') sont prévus dont les parois présentent une distance diminuante en direction du fond du récipient (304).

9. Evier (10) selon la revendication 8, **caractérisé en ce que** les récipients (30, 30') peuvent être reçus l'un dans l'autre de manière à ce qu'ils puissent s'appuyer sur les zones de bord (32).

10. Evier (10) selon l'une ou plusieurs des revendications 1 à 9, **caractérisé en ce que** plusieurs récipients (30, 30') sont prévus, dimensionnés de manière à ce qu'ils puissent être disposés l'un à côté de l'autre dans le bac (12).

11. Evier (10) selon l'une ou plusieurs des revendications 1 à 10, **caractérisé en ce que** les bords et/ou zones de bord (60) du récipient (30) qui ne servent pas de surface d'appui sont réalisés par rabattement.

12. Evier (10) selon l'une ou plusieurs des revendications 1 à 11, **caractérisé en ce que** les récipients (30) présentent une forme essentiellement rectangulaire et que les transitions entre parois voisines et/ou entre parois et la surface de fond (304) sont arrondies.

13. Evier (10) selon l'une ou plusieurs des revendications 1 à 12, **caractérisé en ce que** des projections (70) sont prévues sur le côté extérieur du fond de récipient (304).

14. Evier (10) selon l'une ou plusieurs des revendications 1 à 13, **caractérisé en ce que** le récipient (30) est en acier inoxydable.

15. Evier (10) selon l'une ou plusieurs des revendications 1 à 14, **caractérisé en ce que** les récipients (30) ont des moyens de butée à l'aide desquels les récipients (30) peuvent être guidés entre les parois opposés (14, 16) du bac (12).

16. Evier (10) selon la revendication 15, **caractérisé en ce que** les moyens de butée comportent un élément de glissement (80) présentant un gradin, le gradin étant exécuté de manière à ce que l'élément de glissement (80) présente une surface d'appui (82) pour s'appuyer sur l'enfoncement (20) de l'évier (10) ou sur le plateau (11) servant de table de travail ainsi qu'une surface de butée (84) pour le guidage à travers les parois (14, 16) du bac (12).

17. Evier (10) selon la revendication 16, **caractérisé en ce que** la surface de butée (84) de l'élément de glissement (80) est exécutée non traversante.

18. Evier (10) selon les revendications 16 et 17, **caractérisé en ce que** l'élément de glissement (80) consiste en plastique glissant.

19. Evier (10) selon la revendication 18, **caractérisé en ce que** le récipient (30) et l'élément de glissement (80) sont collés et que tant le plastique de l'élément de glissement (80) que le joint collé sont résistants à la chaleur.

20. Evier (10) selon l'une ou plusieurs des revendications 15 à 19, **caractérisé en ce que** les moyens de butée présentent des éléments coudés (90) qui peuvent être montés dans les zones de bord (32) des récipients (30, 30').

21. Evier (10) selon l'une ou plusieurs des revendications 15 à 20, **caractérisé en ce que** les moyens de butée présentent des éléments en forme de cheville (92) qui peuvent être fixés aux récipients (30).

22. Evier (10) selon la revendication 21, **caractérisé en ce que** la fixation des éléments en forme de cheville (92) se fait au moyen d'un écrou monté sur le récipient (30) et d'une tige filetée.

23. Evier (10) selon l'une ou plusieurs des revendications 20 à 22, **caractérisé en ce que** des chevilles de glissement (32') sont prévues qui forment une surface d'appui des zones de bord (32) des récipients (30).
